# EUROPÄISCHE PATENTSCHRIFT

(11) **EP 3 846 410 B1**
(45) Veröffentlichungstag und Bekanntmachung des Hinweises auf die Patenterteilung: **29.06.2022**
(21) Anmeldenummer: 19220002.0
(22) Anmeldetag: 30.12.2019
(51) Int. Cl.: G08G 5/00, H04L 67/12

(54) **FLUGVERKEHRSKONTROLLSYSTEM SOWIE VERFAHREN ZUR KOMMUNIKATION IN EINEM FLUGVERKEHRSKONTROLLSYSTEM**
AVIATION CONTROL SYSTEM AND METHOD FOR COMMUNICATING IN AN AVIATION CONTROL SYSTEM
SYSTÈME DE COMMANDE DE LA CIRCULATION AÉRIENNE ET PROCÉDÉ DE COMMUNICATION DANS UN SYSTÈME DE COMMANDE DE LA CIRCULATION AÉRIENNE

(43) Veröffentlichungstag der Anmeldung: 07.07.2021
(73) Patentinhaber: Rohde & Schwarz GmbH & Co. KG, 81671 München (DE)
(72) Erfinder: Kilpert, Joerg, 81671 München (DE)
(74) Vertreter: Prinz & Partner mbB

(56) Entgegenhaltungen:
- CN-A- 108 011 770

## Beschreibung

Die Erfindung betrifft ein Flugverkehrskontrollsystem zur Flugsicherung. Ferner betrifft die Erfindung ein Verfahren zur Kommunikation in einem Flugverkehrskontrollsystem zur Flugsicherung.

Flugverkehrskontrollsysteme zur Flugsicherung weisen üblicherweise mehrere Lotsenarbeitsplätze auf, denen jeweils eine Recheneinheit, beispielsweise ein Computer, ein Bildschirm sowie Audiozubehör zugeordnet sind, insbesondere Mikrofone, Handapparate, Kopfhörer, Lautsprecher und ähnliches Audiozubehör. Über die entsprechenden Komponenten am jeweiligen Lotsenarbeitsplatz kann der zuständige Fluglotse die Flugsicherung durchführen, indem er unter anderem mit Piloten über das Audiozubehör kommuniziert bzw. Informationen bezüglich des Luftraums und der darin befindlichen Flugzeuge erhält.

Als nachteilig hat sich bei den aus dem Stand der Technik bekannten Flugverkehrskontrollsystemen jedoch herausgestellt, dass die unterschiedlichen Komponenten einen erheblichen Platzbedarf aufweisen, da die entsprechenden Geräte an jedem Lotsenarbeitsplatz vorgesehen und dort angeschlossen werden müssen. Zudem schränkt dies die Arbeitsbedingungen der Fluglotsen ein, da sie an ihrem Lotsenarbeitsplatz sitzen bleiben müssen.

Aus der CN 108 011 770 A ist ein dezentrales Flugverkehrskontrollsystem bekannt, das einen Server umfasst, mit dem mehrere Endgeräte mittels TCP/IP kommunizieren. Das Flugverkehrskontrollsystem bietet die Möglichkeit, eine Sendeeinrichtung auszuwählen, um entsprechende Peripheriegeräte der ausgewählten Station anzeigen zu lassen, sodass dazugehörige Informationen abgerufen werden können.

Die Aufgabe der Erfindung ist es, ein Flugverkehrskontrollsystem zur Flugsicherung bereitzustellen, mit dem die Kommunikation vereinfacht und der benötigte Platzbedarf reduziert ist.

Die Aufgabe wird erfindungsgemäß gelöst durch ein Flugverkehrskontrollsystem zur Flugsicherung, das mindestens einen Server, eine Auswahlvorrichtung, über die unterschiedliche Funkszenarien auswählbar sind, wenigstens einen Zugangspunkt, zumindest ein Audiozubehör und mehrere Sendeeinrichtungen und Empfangseinrichtungen umfasst, , die mit dem Server verbunden sind. Die unterschiedlichen Funkszenarien umfassen Luft-Boden-Kommunikation, Boden-Boden-Kommunikation und/oder Ausbilder-Auszubildender-Kommunikation. Die Auswahlvorrichtung weist wenigstens eine Benutzerschnittstelle, über die ein Benutzer das gewünschte Funkszenario auswählen kann, und wenigstens einen Bildschirm auf, der eingerichtet ist, das ausgewählte Funkszenario darzustellen. Die Auswahlvorrichtung ist eingerichtet, mit dem mindestens einen Server zu kommunizieren, sodass die Auswahlvorrichtung die vorgenommene Auswahl des gewünschten Funkszenarios an den Server überträgt, sodass die Auswahl auf dem Server ausgeführt wird. Der Zugangspunkt ist mit dem mindestens einen Server signalübertragend verbunden. Das zumindest eine Audiozubehör ist eingerichtet, mit dem wenigstens einen Zugangspunkt drahtlos zu kommunizieren. Von den Empfangseinrichtungen empfangene Sprachsignale werden über den Server an den Zugangspunkt übermittelt, von wo das entsprechende Sprachsignal kabellos an das Audiozubehör übermittelt wird. Alternativ oder ergänzend wird ein über das Audiozubehör erzeugtes Sprachsignal vom Audiozubehör kabellos an den Zugangspunkt übermittelt, der das entsprechende Sprachsignal an den Server weiterleitet, von wo das Sprachsignal über eine der Sendeeinrichtungen übertragen wird. Die Verarbeitung der eingehenden und/oder ausgehenden Sprachsignale erfolgt aufgrund des zuvor ausgewählten Funkszenarios, das der Fluglotse zuvor über die Auswahlvorrichtung ausgewählt hat.

Ferner wird die Aufgabe erfindungsgemäß gelöst durch ein Verfahren zur Kommunikation in einem Flugverkehrskontrollsystem zur Flugsicherung, das mehrere Sendeeinrichtungen und Empfangseinrichtungen aufweist, die mit einem Server verbunden sind. Bei dem Verfahren wird ein gewünschtes Funkszenario über eine Benutzerschnittstelle einer Auswahlvorrichtung ausgewählt, wobei das ausgewählte Funkszenario eine Luft-Boden-Kommunikation, eine Boden-Boden-Kommunikation und/oder eine Ausbilder-Auszubildender-Kommunikation ist. Das ausgewählte Funkszenario wird auf einem Bildschirm der Auswahlvorrichtung dargestellt. Das gewünschte Funkszenario wird mittels der Auswahlvorrichtung an den Server übertragen, auf dem die Auswahl ausgeführt wird. Über zumindest ein Audiozubehör wird mit einem Zugangspunkt drahtlos kommuniziert, der mit dem mindestens einen Server signalübertragend verbunden ist. Von den Empfangseinrichtungen empfangene Sprachsignale werden über den Server an den Zugangspunkt übermittelt, von wo das entsprechende Sprachsignal kabellos an das Audiozubehör übermittelt wird. Alternativ oder ergänzend wird ein über das Audiozubehör erzeugtes Sprachsignal vom Audiozubehör kabellos an den Zugangspunkt übermittelt, der das entsprechende Sprachsignal an den Server weiterleitet, von wo das Sprachsignal über eine der Sendeeinrichtungen übertragen wird. Die Verarbeitung der eingehenden und/oder ausgehenden Sprachsignale erfolgt aufgrund des zuvor ausgewählten Funkszenarios, das der Fluglotse zuvor über die Auswahlvorrichtung ausgewählt hat.

Der Grundgedanke der Erfindung ist es, dass die Lotsenarbeitsplätze insofern zu reduzieren, als zumindest das Audiozubehör nicht mehr kabelgebunden an einem Computer bzw. an einer Recheneinheit am entsprechenden Lotsenarbeitsplatz angeschlossen sein muss. Die entsprechende Kommunikation über das Audiozubehör erfolgt vielmehr über den zentralen Zugangspunkt, mit dem das Audiozubehör drahtlos verbunden ist. Insofern erfolgt eine drahtlose Kommunikation zwischen dem Audiozubehör und dem Zugangspunkt. Über das Audiozubehör und den Zugangspunkt ist somit eine Sprachkommunikation in drahtloser Weise möglich. Der Fluglotse kann sich somit frei an seinem Lotsenarbeitsplatz bewegen, insbesondere ohne störende Verkabelung.

Die drahtlose Kommunikation zwischen dem Zugangspunkt und dem Audiozubehör kann über LTE, WiFi, Bluetooth und/oder ZigBee bzw. andere entsprechende Kommunikationsstandards erfolgen. Beispielsweise wird der Austausch der Daten über das Internet-Protokoll (IP) gewährleistet. Das Audiozubehör ist also funkbasiert mit dem Zugangspunkt verbunden.

Es wird also weniger Verkabelung benötigt. Der Lotsenarbeitsplatz ist dadurch grundsätzlich übersichtlicher gestaltet.

Der mindestens eine Server kann an einem oder an mehreren Standorten vorgesehen sein. Hierdurch lässt sich eine Redundanz schaffen, wodurch das Ausfallrisiko des gesamten Flugverkehrskontrollsystems entsprechend reduziert wird.

Ein Aspekt sieht vor, dass der Bildschirm berührungsempfindlich ausgebildet ist, wobei die Benutzerschnittstelle durch den berührungsempfindlichen Bildschirm bereitgestellt ist. Insofern kann der Fluglotse das jeweilige Funkszenario in einfacher Weise an dem berührungsempfindlichen Bildschirm auswählen. Bei dem berührungsempfindlichen Bildschirm handelt es sich demnach um einen sogenannten Touchscreen. Dieser kann drucksensitiv oder kapazitiv ausgebildet sein.

Insbesondere ist der Bildschirm eingerichtet, Informationen weiterer Dienste anzuzeigen. Hierbei kann es sich um Pickup-Service oder ähnliche zusätzliche Dienste handeln, die der Fluglotse neben der Sprachkommunikation im Auge behalten muss. Grundsätzlich werden solche Informationen mittels Bediensignalen übermittelt, die sich von den Sprachsignalen dahingehend unterscheiden, dass sie nicht über das Audiozubehör gesendet bzw. empfangen werden.

Ein weiterer Aspekt sieht vor, dass der Zugangspunkt eingerichtet ist, die über das Audiozubehör eingegangenen Spracheingaben drahtlos zu empfangen und an den mindestens einen Server weiterzuleiten. Die Sprachkommunikation erfolgt demnach über das jeweilige Audiozubehör, das die entsprechenden Sprachsignale in Daten wandelt und die Daten an den Zugangspunkt sendet, der diese wiederum an den mindestens einen Server weiterleitet, der eingerichtet ist, die Sprachsignale weiterzuleiten, insbesondere aufgrund des zuvor ausgewählten Funkszenarios.

Gemäß einem weiteren Aspekt weist das Flugverkehrskontrollsystem ein Datennetzwerk auf, insbesondere ein lokales Netzwerk (LAN) und/oder ein Weitverkehrsnetzwerk (WAN), in das der mindestens eine Server, die Auswahlvorrichtung und der wenigstens eine Zugangspunkt eingebunden sind. Die jeweilige Kommunikation kann demnach über das Internet-Protokoll (IP) erfolgen, sodass die entsprechenden Daten über das jeweilige Datennetzwerk übertragen werden.

Ein weiterer Aspekt sieht vor, dass das Flugverkehrskontrollsystem mehrere Lotsenarbeitsplätze umfasst, die jeweils zumindest einen Bildschirm und zumindest ein Audiozubehör aufweisen, insbesondere jeweils eine Auswahlvorrichtung. Die Lotsenarbeitsplätze stellen sicher, dass mehrere Fluglotsen gleichzeitig den Flugraum überwachen können, insbesondere unterschiedliche Bereiche. Jedem der Fluglotsen ist demnach ein Bildschirm sowie ein Audiozubehör zugeordnet, sodass der Fluglotse mit den Piloten kommunizieren kann und gleichzeitig entsprechende Veränderungen im Luftraum oder weitere Informationen auf dem Bildschirm sieht.

Insbesondere ist der Zugangspunkt den mehreren Lotsenarbeitsplätzen zugeordnet. Dies bedeutet, dass die jeweiligen Audiozubehöre, die dem jeweiligen Lotsenarbeitsplatz zugeordnet sind, mit dem einen zentralen Zugangspunkt drahtlos kommunizieren.

Grundsätzlich können mehrere Zugangspunkte vorgesehen sein, um eine Redundanz zu schaffen. Hierdurch erhöht sich die Betriebssicherheit des Flugverkehrskontrollsystems, da bei Ausfall eines Zugangspunkts der andere Zugangspunkt den Betrieb gewährleistet.

Die jeweiligen Audiozubehöre der mehreren Lotsenarbeitsplätze können mit dem Zugangspunkt drahtlos kommunizieren. Der Zugangspunkt ist also eingerichtet, gleichzeitig mehrere drahtlose Verbindungen mit unterschiedlichen Audiozubehören aufrechtzuerhalten.

Ein weiterer Aspekt sieht vor, dass zumindest die Bildschirme der mehreren Lotsenarbeitsplätze mit einer zugeordneten Recheneinheit am jeweiligen Lotsenarbeitsplatz verbunden sind, insbesondere wobei die jeweiligen Recheneinheiten in das Datennetzwerk eingebunden sind. Insofern ist an jedem Lotsenarbeitsplatz eine Recheneinheit, beispielsweise ein Computer, vorgesehen, über den die entsprechenden Sprachdaten verarbeitet werden. Die jeweilige Recheneinheit kann in das Datennetzwerk, beispielsweise das lokale Netzwerk bzw. das Weitverkehrsnetzwerk, eingebunden sein, sodass die entsprechenden Daten empfangen werden, die auf dem jeweiligen Bildschirm dargestellt werden sollen. Es steht also ein lokaler, am Lotsenarbeitsplatz eingerichteter Computer zur Verfügung.

Bei der Recheneinheit handelt es sich insbesondere um eine Recheneinheit, auf der ein Betriebssystem läuft.

Gemäß einer anderen Ausführungsform ist vorgesehen, dass zumindest die Bildschirme der mehreren Lotsenarbeitsplätze mit einem zentralen Server verbunden sind, auf dem virtuell Maschinen für die jeweiligen Lotsenarbeitsplätze eingerichtet sind. Insofern ist es nicht mehr notwendig, dass an jedem Lotsenarbeitsplatz eine eigene Recheneinheit bzw. ein eigener Computer vorgesehen ist. Die am jeweiligen Lotsenarbeitsplatz zur Verfügung gestellten Geräte können damit weiter reduziert werden. Der Platzbedarf kann weiter gesenkt werden. Zudem wird die Abwärme am Lotsenarbeitsplatz deutlich reduziert.

Ein weiterer Aspekt sieht vor, dass der Zugangspunkt dem zentralen Server zugeordnet ist. Der Zugangspunkt kann direkt mit dem zentralen Server kommunizieren oder indirekt über das Datennetzwerk, in das sowohl der zentrale Server als auch der Zugangspunkt eingebunden sind.

Gemäß einem weiteren Aspekt ist der zentrale Server mit zumindest einem Peripheriegerät verbunden, das eine Anzeige aufweist, sodass der Bildschirm über die Anzeige des Peripheriegeräts bereitgestellt ist. Bei dem Peripheriegerät kann es sich um ein Radar oder ein anderes Gerät handeln, das üblicherweise eine Anzeige aufweist. Aufgrund der Anzeige des ohnehin vorgesehenen Peripheriegeräts kann der zusätzliche Bildschirm der Auswahlvorrichtung eingespart werden, wodurch die Anzahl der benötigten Komponenten am jeweiligen Lotsenarbeitsplatz weiter reduziert werden kann. Die Kosten sowie der Platzbedarf kann also weiter gesenkt werden, wodurch der Lotsenarbeitsplatz aufgeräumt gestaltet werden kann.

Ferner kann das zumindest eine Audiozubehör eingerichtet sein, Luftschall in ein elektrisches Signal umzuwandeln, insbesondere ein elektrisches Sprachsignal. Bei dem Audiozubehör handelt es sich demnach um ein aktives Gerät zur Sprachkommunikation, mit dem der jeweilige Fluglotse kommuniziert, wobei die Kommandos des Fluglotsen in elektrische Sprachsignale umgewandelt werden, die über das Datennetzwerk weiterverarbeitet bzw. weitergeleitet werden.

Grundsätzlich kann es sich bei dem Audiozubehör also um eine Spracheingabeeinheit handeln, beispielsweise ein Mikrofon.

Auch kann es sich bei dem Audiozubehör um eine Sprachausgabeeinheit handeln, beispielsweise einen Lautsprecher.

Das Audiozubehör kann auch eine Spracheingabeeinheit und eine Sprachausgabeeinheit umfassen, beispielsweise ein Mikrofon und einen Lautsprecher. Dies ist insbesondere dann der Fall, wenn das Audiozubehör ein Headset ist.

Insbesondere ist das zumindest eine Audiozubehör also ein Headset, ein Handapparat, ein Mobilteil und/oder ein Mikrofon.

Die unterschiedlichen Funkszenarien können unter anderem Luft-Boden-Kommunikation, Boden-Boden-Kommunikation und/oder Ausbilder-Auszubildender-Kommunikation umfassen. Insofern kann der Bediener an der Auswahlvorrichtung unterschiedliche Funkszenarien auswählen.

Die Auswahl des entsprechenden Funkszenarios, die der Fluglotse über die Auswahlvorrichtung vornimmt, wird auf dem Server ausgeführt, mit dem die Auswahlvorrichtung verbunden ist.

Grundsätzlich kann das Flugverkehrskontrollsystem mehrere Sendeeinrichtungen und Empfangseinrichtungen umfassen, die mit dem Server verbunden sind. Die Sendeeinrichtungen und Empfangseinrichtungen können jeweils eingerichtet sein, über Funk zu kommunizieren.

Es können demnach entsprechende, von den Empfangseinrichtungen (über Funk) empfangene Sprachsignale, beispielsweise von Piloten, über den Server an den Zugangspunkt übermittelt werden, von wo das entsprechende Sprachsignal kabellos an das Audiozubehör übermittelt werden kann. Der Fluglotse kann dann über das Audiozubehör den Inhalt des Sprachsignals hören.

Ebenso kann ein vom Fluglotsen über das Audiozubehör erzeugtes Sprachsignal, beispielsweise eine Sprachnachricht, vom Audiozubehör kabellos an den Zugangspunkt übermittelt werden, der das entsprechende Sprachsignal an den Server weiterleitet, von wo das Sprachsignal über eine entsprechende Sendeeinrichtung übertragen wird, beispielsweise an einen Piloten, der den Inhalt des Sprachsignals hört.

Die entsprechende Verarbeitung der eingehenden und/oder ausgehenden Sprachsignale kann dabei aufgrund des zuvor ausgewählten Funkszenarios erfolgen, das der Fluglotse zuvor über die Auswahlvorrichtung ausgewählt hat.

Über die Auswahlvorrichtung kann also grundsätzlich das gewünschte Funkszenario eingestellt werden. Es kann über die Auswahlvorrichtung unter anderem ausgewählt werden, mit welchen Sendeeinrichtungen und/oder Empfangseinrichtungen der jeweilige Lotsenarbeitsplatz eine Sprachverbindung (Sprachkommunikation) aufbauen soll, um die Sprachsignale zu senden bzw. zu empfangen.

Es können mehrere Auswahlvorrichtungen, die jeweils einem Lotsenarbeitsplatz zugeordnet sind, mit demselben Server verbunden sein.

Ebenso sind mehrere Sendeeinrichtungen und/oder Empfangseinrichtungen mit demselben Server verbunden.

Der Server stellt also eine zentrale Verteileinheit für die jeweiligen Sprachsignale sicher.

Die Sendeeinrichtungen sind ausgebildet, die vom Audiozubehör, insbesondere der Spracheingabeeinheit, erstellte Sprachsignale zu erhalten und zu übermitteln, beispielsweise an einen Piloten.

Die Empfangseinrichtungen sind ausgebildet, die empfangenen Sprachsignale zu erhalten und zu übermitteln.

Neben den Sprachsignalen können (über die Sendeeinrichtungen und/oder Empfangseinrichtungen) aber auch Bediensignale gesendet bzw. empfangen werden, die am Bildschirm bzw. der Benutzerschnittstelle eingegeben worden sind bzw. die am Bildschirm dargestellt werden können.

Wie vorstehend bereits erläutert, werden die Sprachsignale zwischen den Lotsenarbeitsplätzen, insbesondere dem Audiozubehör, und den Sende- bzw. Empfangseinrichtungen über den Server und den Zugangspunkt übertragen, insbesondere das Datennetz, in das der Server und der Zugangspunkt eingebunden sind.

Der Server ist also den Sende- und/oder Empfangseinrichtungen entsprechend zugeordnet, um die Sprachsignale an diese zu übertragen bzw. von diesen zu empfangen und weiterverarbeiten zu können.

Mit anderen Worten stehen das Audiozubehör und die Sende- und/oder Empfangseinrichtungen über den Zugangspunkt und den Server in Kommunikationsverbindung.

Grundsätzlich können die dem Server zugeordneten Sende- und/oder Empfangseinrichtungen dieselbe Funkfrequenz nutzen, um die Sprachsignale zu senden bzw. zu empfangen.

Neben den Sprachsignalen kann der Server auch Bediensignale verarbeiten.

Generell ist das Flugverkehrskontrollsystem demnach eingerichtet, bei mehreren gleichzeitig empfangenen Sprachsignale diese, beispielsweise in Abhängigkeit des ausgewählten Funkszenarios, an die Lotsenarbeitsplätze zu übertragen.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1 eine schematische Darstellung eines erfindungsgemäßen Flugverkehrskontrollsystems gemäß einer ersten Ausführungsform, und
- Figur 2 eine schematische Darstellung eines erfindungsgemäßen Flugverkehrskontrollsystems gemäß einer zweiten Ausführungsform.

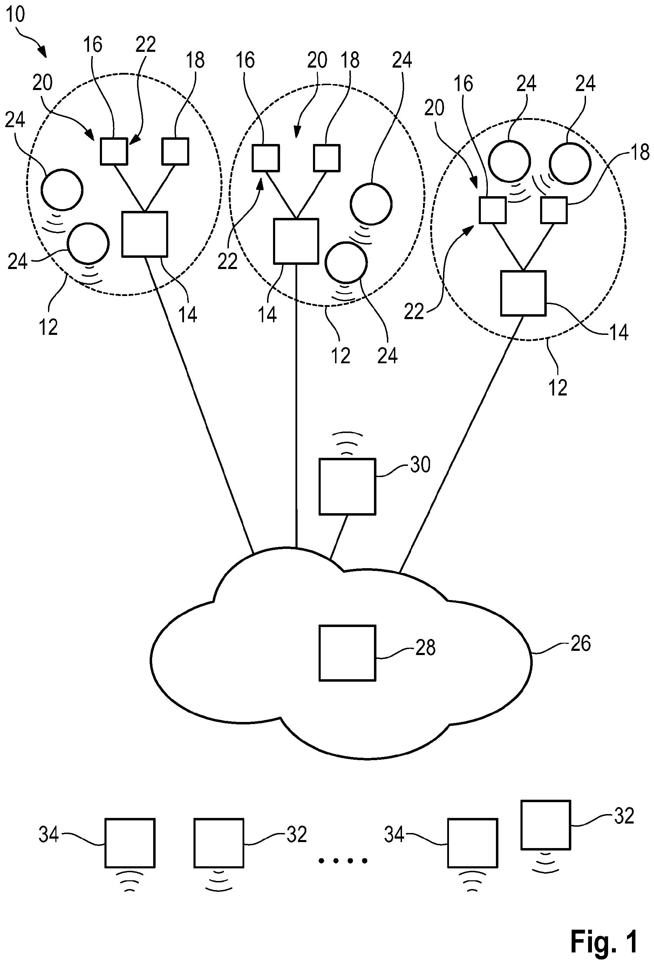

In Figur 1 ist ein Flugverkehrskontrollsystem 10 zur Flugsicherung gezeigt, das mehrere Lotsenarbeitsplätze 12 umfasst.

Die Lotsenarbeitsplätze 12 weisen in der gezeigten Ausführungsform jeweils eine lokal am entsprechenden Lotsenarbeitsplatz 12 installierte Recheneinheit 14 auf, die mit einem Bildschirm 16, auch Monitor genannt, sowie einer Ausgabeeinheit 18 signalübertragend verbunden ist, beispielsweise einem integrierten Lautsprecher oder einer Leuchte.

Des Weiteren ist jedem Lotsenarbeitsplatz 12 eine Benutzerschnittstelle 20 zugeordnet, über die der jeweilige Fluglotse entsprechende Eingaben vornehmen kann.

Die Benutzerschnittstelle 20 sowie der Bildschirm 16 können zusammen Teil einer Auswahlvorrichtung 22 sein, über die der Fluglotse ein gewünschtes Funkszenario auswählen kann, wie nachfolgend noch erläutert wird.

Der Bildschirm 16 ist insbesondere berührungsempfindlich ausgebildet, also als ein Touchscreen, sodass über den Bildschirm 16 die entsprechenden Eingaben getätigt werden können.

Mit anderen Worten kann der Fluglotse das jeweilige Funkszenario in einfacher Weise an dem berührungsempfindlichen Bildschirm 16 auswählen. Der berührungsempfindliche Bildschirm 16 kann drucksensitiv oder kapazitiv ausgebildet sein.

Darüber hinaus ist jedem Lotsenarbeitsplatz 12 zumindest ein Audiozubehör 24 zugeordnet.

In der gezeigten Ausführungsform sind jedem Lotsenarbeitsplatz 12 zwei Audiozubehöre 24 zugeordnet, bei denen es sich beispielsweise um ein Headset, das einen Lautsprecher bzw. Kopfhörer aufweist, und ein Mikrofon handelt.

Darüber hinaus geht aus der Figur 1 hervor, dass das Flugverkehrskontrollsystem 10 ein Datennetzwerk 26 aufweist, in das die jeweiligen Recheneinheiten 14 eingebunden sind.

Das Datennetzwerk 26 kann ein lokales Netzwerk (LAN) und/oder ein Weitverkehrsnetzwerk (WAN) umfassen.

Darüber hinaus ist in das Datennetzwerk 26 mindestens ein Server 28 eingebunden, über den Daten bereitgestellt bzw. ausgetauscht werden, die über das Datennetzwerk 26 an die jeweiligen Recheneinheiten 14 der Lotsenarbeitsplätze 12 übermittelt werden.

Zudem umfasst das Flugverkehrskontrollsystem 10 einen Zugangspunkt 30, der zur drahtlosen Kommunikation mit den Audiozubehören 24 ausgebildet ist.

Mit anderen Worten können sich die Audiozubehöre 24 der jeweiligen Lotsenarbeitsplätze 12 mit dem zentralen Zugangspunkt 30 verbinden, sodass eine drahtlose Kommunikation möglich ist.

Über die Audiozubehöre 24 können elektrische Sprachsignale empfangen bzw. ausgesandt werden, die über den zentralen Zugangspunkt 30 an den Server 28 übermittelt werden.

Das Datennetzwerk 26 kann hierzu neben dem Server 28 mit Sendeeinrichtungen 32 und/oder Empfangseinrichtungen 34 verbunden sein, über die entsprechende Spracheingaben bzw. Sprachausgaben erfolgen können, also Sprachsignale eingegeben bzw. Sprachsignale ausgesandt werden.

Aus der Figur 1 wird deutlich, dass die mehreren Lotsenarbeitsplätze 12 dem einen Zugangspunkt 30 zugeordnet sind.

Um eine Redundanz zu schaffen, können jedoch auch mehrere Zugangspunkte 30 vorgesehen sein, sodass bei einem Ausfall eines Zugangspunkts 30 ein anderer Zugangspunkt 30 die entsprechende Kommunikation aufrechterhält bzw. sicherstellt.

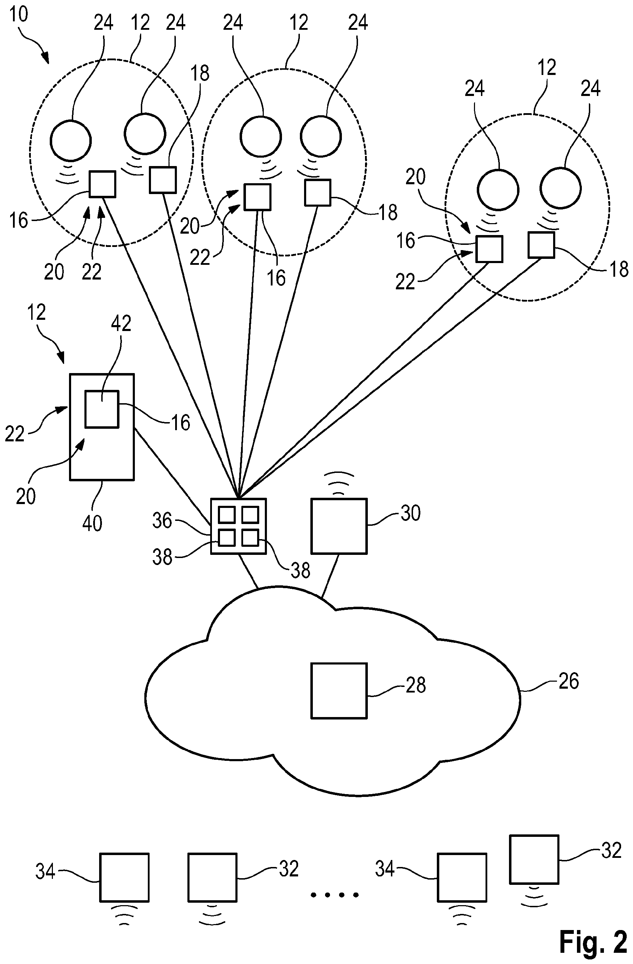

In Figur 2 ist eine zweite Ausführungsform gezeigt, die sich von der in Figur 1 gezeigten ersten Ausführungsform dahingehend unterscheidet, dass am jeweiligen Lotsenarbeitsplatz 12 keine lokal vorgesehenen Recheneinheiten 14 mehr vorhanden sind. Vielmehr ist ein zentraler Server 36 vorgesehen, mit dem die Auswahlvorrichtungen 22 der Lotsenarbeitsplätze 12 verbunden sind, also die Bildschirme 16, die Ausgabeeinheiten 18 sowie die Benutzerschnittstellen 20.

Auf dem zentralen Server 36 können virtuelle Maschinen 38 für die jeweiligen Lotsenarbeitsplätze 12 eingerichtet sein, sodass die entsprechenden Rechenleistungen zentral auf dem zentralen Server 36 vorgesehen sind.

Es ist also eine zentrale Recheneinheit bzw. ein zentrales Rechenzentrum vorgesehen, worüber die Rechenleistung für die Lotsenarbeitsplätze 12 zur Verfügung gestellt werden.

Zudem ist der Zugangspunkt 30 dem zentralen Server 36 zugeordnet. In der gezeigten Ausführungsform ist der Zugangspunkt 30 mit dem zentralen Server 36 über das Datennetzwerk 26 verbunden.

Mit anderen Worten ist der zentrale Server 36 ebenfalls in dem Datennetzwerk 26 des Flugverkehrskontrollsystems 10 eingebunden, sodass entsprechende Daten zwischen dem zentralen Server 36 über das Datennetzwerk 26 ausgetauscht werden können.

Grundsätzlich kann vorgesehen sein, dass das Flugverkehrskontrollsystem 10 ein Peripheriegerät 40 aufweist, beispielsweise ein Radargerät. Das Peripheriegerät 40 weist eine eigene Anzeige 42 auf, die als Bildschirm 16 genutzt werden kann.

Der zentrale Server 36 kommuniziert demnach mit dem Peripheriegerät 40 um die darzustellenden Daten bzw. Informationen zu übertragen, die dann auf der Anzeige 42 dargestellt werden können. Der Bildschirm 16 der Auswahlvorrichtung 22 ist also Teil des Peripheriegeräts 40.

Mit anderen Worten kann der zentrale Server 36 die entsprechenden Daten zur Verfügung stellen, die über den Bildschirm 16 üblicherweise dem Fluglotsen dargestellt werden.

Mit dem Flugverkehrskontrollsystem 10 beider Ausführungsformen können über Funk übermittelte Sprachsignale, die von den Empfangseinrichtungen 34 empfangen worden sind, beispielsweise Sprachsignale von Piloten, über das Datennetzwerk 26, insbesondere den Server 28, an den Zugangspunkt 30 übermittelt werden.

Vom Zugangspunkt 30 kann dann das entsprechende Sprachsignal kabellos an das Audiozubehör 24 des jeweiligen Lotsenarbeitsplatz 12 übermittelt werden. Der Fluglotse am entsprechenden Lotsenarbeitsplatz 12 kann dann über das Audiozubehör 24 den Inhalt des Sprachsignals hören.

Grundsätzlich wird über den Server 28 die empfangenen Sprachsignale verteilt, sodass das gewünschte Sprachsignal dem Fluglotsen am entsprechenden Lotsenarbeitsplatz 12 zur Verfügung gestellt wird. Die Verteilung der Sprachsignale kann aufgrund des zuvor über die Auswahlvorrichtung 22 ausgewählten Funkszenarios erfolgen.

Ebenso erfolgt die Weiterleitung von Sprachsignalen in die andere Richtung.

Das bedeutet, dass vom Fluglotsen über das Audiozubehör 24 erzeugte Sprachsignale, beispielsweise Sprachnachrichten bzw. Kommandos, vom Audiozubehör 24 kabellos an den Zugangspunkt 30 übermittelt werden.

Der Zugangspunkt 30 leitet das entsprechende Sprachsignal bzw. die zugehörigen Daten an den Server 28 (mittels des Datennetzwerks 26) weiter, von wo das Sprachsignal bzw. die Daten über zumindest eine Sendeeinrichtung 32, die ebenfalls in das Datennetzwerk 26 eingebunden ist, übertragen wird, beispielsweise an einen Piloten, der dann den Inhalt des Sprachsignals hört.

Auch hier wird über den Server 28 wieder die entsprechend zuvor ausgewählte Sendeeinrichtung 32 angesteuert, die aufgrund des zuvor vom Fluglotsen ausgewählten Funkszenarios in Frage kommt.

## Patentansprüche

1. Flugverkehrskontrollsystem zur Flugsicherung, mit mindestens einem Server (28), einer Auswahlvorrichtung (22), über die unterschiedliche Funkszenarien auswählbar sind, wenigstens einem Zugangspunkt (30), zumindest einem Audiozubehör (24), und mehreren Sendeeinrichtungen (32) und Empfangseinrichtungen (34), die mit dem Server (28) verbunden sind,
wobei die unterschiedlichen Funkszenarien Luft-Boden-Kommunikation, Boden-Boden-Kommunikation und/oder Ausbilder-Auszubildender-Kommunikation umfassen,
wobei die Auswahlvorrichtung (22) wenigstens eine Benutzerschnittstelle (20), über die ein Benutzer das gewünschte Funkszenario auswählen kann, und wenigstens einen Bildschirm (16) umfasst, der eingerichtet ist, das ausgewählte Funkszenario darzustellen,
wobei die Auswahlvorrichtung (22) eingerichtet ist, mit dem mindestens einen Server (28) zu kommunizieren, sodass die Auswahlvorrichtung (22) die vorgenommene Auswahl des gewünschten Funkszenarios an den Server (28) überträgt, sodass die Auswahl auf dem Server (28) ausgeführt wird,
wobei der Zugangspunkt (30) mit dem mindestens einen Server (28) signalübertragend verbunden ist,
wobei das zumindest eine Audiozubehör (24) eingerichtet ist, mit dem wenigstens einen Zugangspunkt (30) drahtlos zu kommunizieren,
wobei die Empfangseinrichtungen so eingerichtet sind, dass von den Empfangseinrichtungen (34) empfangene Sprachsignale über den Server (28) an den Zugangspunkt (30) übermittelt werden, von wo das entsprechende Sprachsignal kabellos an das Audiozubehör (24) übermittelt wird und/oder das Audiozubehör so eingerichtet ist, dass ein über das Audiozubehör (24) erzeugtes Sprachsignal vom Audiozubehör (24) kabellos an den Zugangspunkt (30) übermittelt wird, der so eingerichtet ist, dass er das entsprechende Sprachsignal an den Server (28) weiterleitet, wobei der Server so eingerichtet ist, dass das Sprachsignal über eine der Sendeeinrichtungen (32) übertragen wird, und
wobei die Verarbeitung der eingehenden und/oder ausgehenden Sprachsignale aufgrund des zuvor ausgewählten Funkszenarios erfolgt, das der Fluglotse zuvor über die Auswahlvorrichtung (22) ausgewählt hat.

2. Flugverkehrskontrollsystem nach Anspruch 1, **dadurch gekennzeichnet, dass** der Bildschirm (16) berührungsempfindlich ausgebildet ist, wobei die Benutzerschnittstelle (20) durch den berührungsempfindlichen Bildschirm (16) bereitgestellt ist.

3. Flugverkehrskontrollsystem nach Anspruch 1 oder 2, **dadurch gekennzeichnet, dass** der Bildschirm (16) eingerichtet ist, Informationen weiterer Dienste anzuzeigen.

4. Flugverkehrskontrollsystem nach einem der vorhergehenden Ansprüche, **dadurch gekennzeichnet, dass** der Zugangspunkt (30) eingerichtet ist, die über das Audiozubehör (24) eingegangen Spracheingaben drahtlos zu empfangen und an den mindestens einen Server (28) weiterzuleiten.

5. Flugverkehrskontrollsystem nach einem der vorhergehenden Ansprüche, **dadurch gekennzeichnet, dass** das Flugverkehrskontrollsystem (10) ein Datennetzwerk (26) aufweist, in das der mindestens eine Server (28), die Auswahlvorrichtung (22) und der wenigstens eine Zugangspunkt (30) eingebunden sind.

6. Flugverkehrskontrollsystem nach einem der vorhergehenden Ansprüche, **dadurch gekennzeichnet, dass** das Flugverkehrskontrollsystem (10) mehrere Lotsenarbeitsplätze (12) umfasst, die jeweils zumindest einen Bildschirm (16) und zumindest ein Audiozubehör (24) aufweisen, insbesondere jeweils eine Auswahlvorrichtung (22).

7. Flugverkehrskontrollsystem nach Anspruch 6, **dadurch gekennzeichnet, dass** der Zugangspunkt (30) den mehreren Lotsenarbeitsplätzen (12) zugeordnet ist.

8. Flugverkehrskontrollsystem nach Anspruch 6 oder 7, **dadurch gekennzeichnet, dass** die jeweiligen Audiozubehöre (24) der mehreren Lotsenarbeitsplätze (12) mit dem Zugangspunkt (30) drahtlos kommunizieren.

9. Flugverkehrskontrollsystem nach einem der Ansprüche 6 bis 8, **dadurch gekennzeichnet, dass** zumindest die Bildschirme (16) der mehreren Lotsenarbeitsplätze (12) mit einer zugeordneten Recheneinheit (14) am jeweiligen Lotsenarbeitsplatz (12) verbunden sind, insbesondere wobei die jeweiligen Recheneinheiten (14) in das Datennetzwerk (26) eingebunden sind.

10. Flugverkehrskontrollsystem nach einem der Ansprüche 6 bis 8, **dadurch gekennzeichnet, dass** zumindest die Bildschirme (16) der mehreren Lotsenarbeitsplätze (12) mit einem zentralen Server (36) verbunden sind, auf dem virtuelle Maschinen (38) für die jeweiligen Lotsenarbeitsplätze (12) eingerichtet sind.

11. Flugverkehrskontrollsystem nach Anspruch 10, **dadurch gekennzeichnet, dass** der Zugangspunkt (30) dem zentralen Server (36) zugeordnet ist.

12. Flugverkehrskontrollsystem nach Anspruch 10 oder 11, **dadurch gekennzeichnet, dass** der zentrale Server (36) mit zumindest einem Peripheriegerät (40) verbunden ist, das eine Anzeige (42) aufweist, sodass der Bildschirm (16) über die Anzeige (42) des Peripheriegeräts (40) bereitgestellt ist.

13. Flugverkehrskontrollsystem nach einem der vorhergehenden Ansprüche, **dadurch gekennzeichnet, dass** das zumindest eine Audiozubehör (24) eingerichtet ist, Luftschall in ein elektrisches Signal umzuwandeln, insbesondere wobei das zumindest eine Audiozubehör (24) ein Headset, ein Handapparat, ein Mobilteil und/oder ein Mikrofon ist.

14. Flugverkehrskontrollsystem nach einem der vorhergehenden Ansprüche, **dadurch gekennzeichnet, dass** die unterschiedlichen Funkszenarien unter anderem Luft-Boden-, Boden-Boden- und/oder Ausbilder-Auszubildender-Kommunikation umfasst.

15. Verfahren zur Kommunikation in einem Flugverkehrskontrollsystem (10) zur Flugsicherung, das mehrere Sendeeinrichtungen (32) und Empfangseinrichtungen (34) aufweist, die mit einem Server (28) verbunden sind, wobei bei dem Verfahren ein gewünschtes Flugszenario über eine Benutzerschnittstelle (20) einer Auswahlvorrichtung (22) ausgewählt wird, wobei das ausgewählte Funkszenario eine Luft-Boden-Kommunikation, eine Boden-Boden-Kommunikation und/oder eine Ausbilder-Auszubildender-Kommunikation ist,
wobei das ausgewählte Funkszenario auf einem Bildschirm (16) der Auswahlvorrichtung (22) dargestellt wird, wobei das gewünschte Funkszenario mittels der Auswahlvorrichtung (22) an den Server (28) übertragen wird, auf dem die Auswahl ausgeführt wird,
wobei über zumindest ein Audiozubehör (24) mit einem Zugangspunkt (30) drahtlos kommuniziert wird, der mit dem mindestens einen Server (28) signalübertragend verbunden ist,
wobei von den Empfangseinrichtungen (34) empfangene Sprachsignale über den Server (28) an den Zugangspunkt (30) übermittelt werden, von wo das entsprechende Sprachsignal kabellos an das Audiozubehör (24) übermittelt wird und/oder ein über das Audiozubehör (24) erzeugtes Sprachsignal vom Audiozubehör (24) kabellos an den Zugangspunkt (30) übermittelt wird, der das entsprechende Sprachsignal an den Server (28) weiterleitet, von wo das Sprachsignal über eine der Sendeeinrichtungen (32) übertragen wird, und
wobei die Verarbeitung der eingehenden und/oder ausgehenden Sprachsignale aufgrund des zuvor ausgewählten Funkszenarios erfolgt, das der Fluglotse zuvor über die Auswahlvorrichtung (22) ausgewählt hat.

## Claims

1. An aviation control system for flight security, having at least one server (28), a selection device (22), via which the different radio scenarios can be selected, at least one access point (30), at least one audio accessory (24), and a plurality of transmission devices (32) and reception devices (34), which are connected to the server (28),
wherein the different radio scenarios comprise air to surface communication, surface to surface communication and/or trainer-trainee communication,
wherein the selection device (22) comprises at least one user interface (20), via which a user can select the desired radio scenario, and at least one monitor (16), which is set up to display the selected radio scenario,
wherein the selection device (22) is set up to communicate with the at least one server (28), so that the selection device (22) transfers the performed selection of the desired radio scenario to the server (28), so that the selection is carried out on the server (28),
wherein the access point (30) is connected to the at least one server (28) so as to transmit signals,
wherein the at least one audio accessory (24) is set up to wirelessly communicate with the at least one access point (30),
wherein the reception devices are set up such that speech signals received from the reception devices (34) are transmitted via the server (28) to the access point (30), from where the corresponding speech signal is wirelessly transmitted to the audio accessory (24) and/or the audio accessory is set up such that a speech signal generated via the audio accessory (24) is transmitted from the audio accessory (24) to the access point (30), which is set up such that it forwards the corresponding speech signal to the server (28), wherein the server is set up such that the speech signal is transmitted via one of the transmission devices (32), and
wherein the processing of the incoming and/or outgoing speech signal occurs on the basis of the previously selected radio scenario that the air traffic controller had previously selected via the selection device (22).

2. The aviation control system according to claim 1, **characterized in that** the monitor (16) is configured to be touch sensitive, wherein the user interface (20) is provided by the touch sensitive monitor (16).

3. The aviation control system according to claim 1 or 2, **characterized in that** the monitor (16) is set up to display information about further services.

4. The aviation control system according to any of the foregoing claims, **characterized in that** the access point (30) is set up to receive the speech input received via the audio accessory (24) wirelessly and forward it to the at least one server (28).

5. The aviation control system according to any of the foregoing claims, **characterized in that** the aviation control system (10) has a data network (26) into which the at least one server (28), the selection device (22) and the at least one access point (30) are integrated.

6. The aviation control system according to any of the foregoing claims, **characterized in that** the aviation control system (10) comprises a plurality of air traffic controller workstations (12), each having at least a monitor (16) and at least one audio accessory (24), in particular in each case a selection device (22).

7. The aviation control system according to claim 6, **characterized in that** the access point (30) is assigned to the plurality of air traffic controller workstations (12).

8. The aviation control system according to claim 6 or 7, **characterized in that** the respective audio accessories (24) of the plurality of air traffic controller workstations (12) wirelessly communicate with the access point (30).

9. The aviation control system according to any of claims 6 to 8, **characterized in that** at least the monitors (16) of the plurality of air traffic controller workstations (12) are connected to an associated processing unit (14) at the respective air traffic controller workstation (12), in particular wherein the respective processing units (14) are integrated into data network (26).

10. The aviation control system according to any of claims 6 to 8, **characterized in that** at least the monitors (16) of the plurality of air traffic controller workstations (12) are connected to a central server (36), on which virtual machines (38) are set up for the respective air traffic controller workstations (12).

11. The aviation control system according to claim 10, **characterized in that** the access point (30) is assigned to the central server (36).

12. The aviation control system according to claim 10 or 11, **characterized in that** the central server (36) is connected to at least one peripheral device (40), which has a display (42), so that the monitor (16) is provided via the display (42) of the peripheral device (40).

13. The aviation control system according to any of the preceding claims, **characterized in that** the at least one audio accessory (24) is set up to convert airborne sound into an electric signal, in particular wherein the at least one audio accessory (24) is a headset, a hand apparatus, a mobile part and/or a microphone.

14. The aviation control system according to any of the preceding claims, **characterized in that** the different radio scenarios comprise among others air to surface, surface to surface and/or trainer-trainee communication.

15. A method for communication in an aviation control system (10) for flight security having a plurality of transmission devices (32) and reception devices (34) which are connected to a server (28),
wherein in the method a desired flight scenario is selected via a user interface (20) of a selection device (22), wherein the selected radio scenario is an air to surface communication, a surface to surface communication and/or a trainer-trainee communication,
wherein the selected radio scenario is presented on a monitor (16) of the selection device (22), wherein the desired radio scenario is transmitted to the server (28) by means of the selection device (22), at which the selection is carried out,
wherein wireless communication takes place with an access point (30) via at least one audio accessory (24), which is connected to the at least one server (28) so as to transmit signals,
wherein speech signals received from the receiving devices (34) are transmitted via the server (28) to the access point (30), from where the corresponding speech signal is wirelessly transmitted to the audio accessory (24) and/or a speech signal generated via the audio accessory (24) is transmitted wirelessly from the audio accessory (24) to the access point (30), which forwards the corresponding speech signal to the server (28), from where the speech signal is transmitted via one of the transmitting devices (32), and
wherein the processing of the incoming and/or outgoing speech signals occurs on the basis of the previously selected radio scenario, which the air traffic controller has previously selected via the selection device (22).

## Revendications

1. Système de contrôle de trafic aérien pour la sécurité de la navigation aérienne, avec au moins un serveur (28), un dispositif de sélection (22), par l'intermédiaire duquel différents scénarios radio peuvent être sélectionnés, au moins un point d'accès (30), au moins un accessoire audio (24), et plusieurs appareils d'émission (32) et appareils de réception (34), qui sont reliés au serveur (28),
dans lequel les différents scénarios radio comprennent une communication air-sol, une communication sol-sol et/ou une communication formateur-apprenant,
dans lequel le dispositif de sélection (22) comprend au moins une interface utilisateur (20), par l'intermédiaire de laquelle un utilisateur peut sélectionner le scénario radio souhaité, et comprend au moins un écran (16), qui est conçu pour représenter le scénario radio sélectionné,
dans lequel le dispositif de sélection (22) est conçu pour communiquer avec le au moins un serveur (28), de sorte que le dispositif de sélection (22) transfère la sélection réalisée du scénario radio souhaité au serveur (28), de sorte que la sélection est exécutée sur le serveur (28),
dans lequel le point d'accès (30) est relié à le au moins un serveur (28) de manière à transférer un signal,
dans lequel le au moins un accessoire audio (24) est conçu pour communiquer sans fil avec le au moins un point d'accès (30),
dans lequel les appareils de réception sont conçus de sorte que les signaux vocaux reçus par les appareils de réception (34) sont transmis par l'intermédiaire du serveur (28) au point d'accès (30), d'où le signal vocal correspondant est transmis sans fil à l'accessoire audio (24) et/ou l'accessoire audio est conçu de sorte qu'un signal vocal produit par l'accessoire audio (24) est transmis sans câble au point d'accès (30), qui est conçu de sorte qu'il réachemine le signal vocal correspondant au serveur (28), dans lequel le serveur est conçu de sorte que le signal vocal est transféré par l'intermédiaire d'un des appareils d'émission (32), et
dans lequel le traitement des signaux vocaux entrants et/ou sortants s'effectue sur la base du scénario radio préalablement sélectionné, que le contrôleur aérien a préalablement sélectionné par l'intermédiaire du dispositif de sélection (22).

2. Système de contrôle de trafic aérien selon la revendication 1, **caractérisé en ce que** l'écran (16) est réalisé de manière tactile, dans lequel l'interface utilisateur (20) est fournie par l'écran (16) tactile.

3. Système de contrôle de trafic aérien selon la revendication 1 ou 2, **caractérisé en ce que** l'écran (16) est conçu pour indiquer des informations à d'autres services.

4. Système de contrôle de trafic aérien selon l'une quelconque des revendications précédentes, **caractérisé en ce que** le point d'accès (30) est conçu pour recevoir sans fil les entrées vocales entrées par l'intermédiaire de l'accessoire audio (24) et pour les réacheminer à le au moins un serveur (28) .

5. Système de contrôle de trafic aérien selon l'une quelconque des revendications précédentes, **caractérisé en ce que** le système de contrôle de trafic aérien (10) présente un réseau de données (26), dans lequel le au moins un serveur (28), le dispositif de sélection (22) et le au moins un point d'accès (30) sont intégrés.

6. Système de contrôle de trafic aérien selon l'une quelconque des revendications précédentes, **caractérisé en ce que** le système de contrôle de trafic aérien (10) comprend plusieurs postes de contrôleur (12), qui présentent respectivement au moins un écran (16) et au moins un accessoire audio (24), en particulier respectivement un dispositif de sélection (22).

7. Système de contrôle de trafic aérien selon la revendication 6, **caractérisé en ce que** le point d'accès (30) est associé aux différents postes de contrôleur (12).

8. Système de contrôle de trafic aérien selon la revendication 6 ou 7, **caractérisé en ce que** les accessoires audio (24) respectifs des différents postes de contrôleur (12) communiquent sans fil avec le point d'accès (30).

9. Système de contrôle de trafic aérien selon l'une quelconque des revendications 6 à 8, **caractérisé en ce qu'**au moins les écrans (16) des différents postes de contrôleur (12) sont reliés à une unité de calcul (14) associée sur le poste de contrôleur (12) respectif, en particulier dans lequel les unités de calcul (14) respectives sont intégrées dans le réseau de données (26).

10. Système de contrôle de trafic aérien selon l'une quelconque des revendications 6 à 8, **caractérisé en ce qu'**au moins les écrans (16) des différents postes de contrôleur (12) sont reliés à un serveur central (36), sur lequel des machines virtuelles (38) sont conçues pour les postes de contrôleur (12) respectifs.

11. Système de contrôle de trafic aérien selon la revendication 10, **caractérisé en ce que** le point d'accès (30) est associé au serveur central (36).

12. Système de contrôle de trafic aérien selon la revendication 10 ou 11, **caractérisé en ce que** le serveur central (36) est relié à au moins un appareil périphérique (40), qui présente un affichage (42), de sorte que l'écran (16) est fourni par l'intermédiaire de l'affichage (42) de l'appareil périphérique (40).

13. Système de contrôle de trafic aérien selon l'une quelconque des revendications précédentes, **caractérisé en ce que** le au moins un accessoire audio (24) est conçu pour convertir un bruit aérien en un signal électrique, en particulier dans lequel le au moins un accessoire audio (24) est un casque, un combiné téléphonique, un combiné et/ou un microphone.

14. Système de contrôle de trafic aérien selon l'une quelconque des revendications précédentes, **caractérisé en ce que** les différents scénarios radio comprennent entre autres une communication air-sol, sol-sol et/ou formateur-apprenant.

15. Procédé de communication dans un système de contrôle de trafic aérien (10) pour la sécurité de la navigation aérienne, qui présente plusieurs appareils d'émission (32) et appareils de réception (34), qui sont reliés à un serveur (28), dans lequel selon le procédé un scénario de vol souhaité est sélectionné par l'intermédiaire d'une interface utilisateur (20) d'un dispositif de sélection (22), dans lequel le scénario radio sélectionné est une communication air-sol, une communication sol-sol et/ou une communication formateur-apprenant,
dans lequel le scénario radio sélectionné est représenté sur un écran (16) du dispositif de sélection (22), dans lequel le scénario radio souhaité est transféré au moyen du dispositif de sélection (22) au serveur (28), sur lequel la sélection est exécutée,
dans lequel une communication sans fil avec un point d'accès (30), qui est relié au au moins un serveur (28) de manière à transmettre un signal, est établie par l'intermédiaire d'au moins un accessoire audio (24),
dans lequel les signaux vocaux reçus par les appareils de réception (34) sont transmis par l'intermédiaire du serveur (28) au point d'accès (30), d'où le signal vocal correspondant est transmis sans câble à l'accessoire audio (24) et/ou un signal vocal produit par l'intermédiaire de l'accessoire audio (24) est transmis sans câble par l'accessoire audio (24) au point d'accès (30), qui réachemine le signal vocal correspondant au serveur (28), d'où le signal vocal est transféré par l'intermédiaire d'un des appareils d'émission (32), et
dans lequel le traitement des signaux vocaux entrants et/ou sortants s'effectue sur la base du scénario radio préalablement sélectionné, que le contrôleur aérien a préalablement sélectionné par l'intermédiaire du dispositif de sélection (22).
